## Europäisches Patentamt
## European Patent Office
## Office européen des brevets

(19)

(11) Veröffentlichungsnummer: **0 176 944**
**B1**

(12) **EUROPÄISCHE PATENTSCHRIFT**

(45) Veröffentlichungstag der Patentschrift:
**26.07.89**

(51) Int. Cl.⁴: **A 61 C 9/00**

(21) Anmeldenummer: **85112144.2**

(22) Anmeldetag: **25.09.85**

(54) Verfahren und Vorrichtung zur Herstellung des auf einer Basisplatte festgelegten Modells eines Zahnkranzes.

(30) Priorität: **02.10.84 DE 3436094**

(43) Veröffentlichungstag der Anmeldung:
**09.04.86 Patentblatt 86/15**

(45) Bekanntmachung des Hinweises auf die Patenterteilung:
**26.07.89 Patentblatt 89/30**

(84) Benannte Vertragsstaaten:
**AT BE CH FR GB IT LI NL SE**

(56) Entgegenhaltungen:
**EP-A- 0 030 312**
**DE-A- 2 653 743**
**US-A- 2 842 845**

(73) Patentinhaber: **Kiefer, Wilhelm H., Obere Mühlstrasse 8,
D-7520 Bruchsal 4 (DE)**

(72) Erfinder: **Kiefer, Wilhelm H., Obere Mühlstrasse 8,
D-7520 Bruchsal 4 (DE)**

(74) Vertreter: **Lemcke, Rupert, Dipl.-Ing. et al,
Patentanwälte Dipl.-Ing. R. Lemcke Dr.-Ing. H.J.
Brommer Bismarckstrasse 16 Postfach 4026,
D-7500 Karlsruhe 1 (DE)**

## Beschreibung

Die Erfindung betrifft ein Verfahren sowie eine Vorrichtung zur Herstellung eines auf einer ebenen Basisplatte festgelegten, zur Entnahme einzelner Zahnmodelle zersägbaren Modells eines Zahnkranzes durch Ausgiessen eines von einem Kiefer mit Hilfe eines Löffels entnommenen Zahnkranzabdruckes und Aufsetzen der passend zu den Zähnen, Zahnstümpfen und/oder Zahnlücken mit Zahnstiften (sog. Pins) bestückten Basisplatte auf den Abdruck bei noch nicht erhärteter Gussmasse, wobei die Zahn-Stifte einerseits in die Gussmasse eindringen und dort bei deren Erhärten festgelegt werden und andererseits in Bohrungen der Basisplatte lösbar eingesteckt sitzen.

Derartige Zahnkranzmodelle werden benötigt, um Kronen, Brücken, Zahnprothesen etc. herzustellen. Damit die Zahnersatzteile in das Modell genau eingepasst werden können, müssen die entsprechenden Teile des Modells herausnehmbar sein, wozu sie nach dem Zersägen des Modells mit Stiften auf der Basisplatte gehalten sind. Ausgehend von dem Abdruck des Zahnkranzes bereitet es allerdings erhebliche Schwierigkeiten, die Stifte auf der Basisplatte so zu positionieren, dass sie bei dem jedesmal anders gestalteten Modell an der richtigen Stelle sitzen.

Zur Anbringung der Stifte bedient man sich bisher sog. Pin-Setzgeräte. Diese weisen einen Kreuztischsupport auf, an dessen Oberseite der Löffel mit dem Abdruck des Zahnkranzes angeordnet ist und dessen Unterseite die Basisplatte trägt. Oberhalb des Zahnkranzabdruckes befindet sich ein ortsfester Peilstab, dem unterhalb der Basisplatte ein ortsfester Bohrer gegenübersteht, dessen Achse mit der Peilstabachse fluchtet. Nunmehr wird der Support so verfahren, dass der Peilstab an diejenige Position der Abdruckmasse herangeführt ist, bei der man später einen Stift zur Befestigung eines Modellteiles haben möchte. Bei Erreichen der gewünschten Position wird der Kreuztischsupport nach unten gedrückt, so dass der Bohrer ein entsprechendes Loch in die Basisplatte bohrt. Dieser Vorgang muss zahlreich wiederholt werden, je nachdem, wie viele Sägestümpfe das Zahnkranzmodell haben muss. Im bekannten Falle benötigt jeder Sägestumpf zwei Stifte, damit er sich nicht auf der Basisplatte verdrehen kann. Schliesslich wird die fertig gebohrte Basisplatte mit Stiften bestückt, der Zahnkranzabdruck wird mit Gips ausgegossen und es wird dann die mit Stiften bestückte Basisplatte von oben aufgesetzt, wobei sie exakt auszurichten ist, damit die Stifte auch tatsächlich an den gewünschten Stellen in den Gips hineinragen.

Nachteilig ist an dieser bekannten Vorgehensweise zunächst einmal, dass die Pin-Setzgeräte sehr teuer sind. Ausserdem verschiebt sich beim Bohren der Support oft um sein Eigenspiel oder es verkantet sich die Basisplatte, so dass der verhältnismässig dünne Bohrer abbricht. Darüber hinaus ist das Vorgehen mit den bekannten Pin-Setzgeräten relativ aufwendig und es wird das zunächst genau vorgenommene Abfühlen der Stellen für die Stifte teilweise anschliessend zunichtegemacht, weil die Ausrichtung der mit Stiften bestückten Basisplatte über dem mit Gips gefüllten Zahnkranzabdruck hohes Augenmass erfordert. Schliesslich ist der mit dem bekannten Verfahren erforderliche Zeitaufwand sehr hoch.

Zum eingangs genannten Gegenstand ist ausserdem auf die EP-A 0 030 312 hinzuweisen. Bei dieser bedarf es jedoch zur Anbringung der Markierungen einer besonderen Zielvorrichtung in Form eines Fluchtgerätes mit einem gebündelten Lichtstrahl, eines Peilstabes mit dazugehörenden Führungen oder einer speziellen Bohrmaschine, wobei ausserdem in den beiden erstgenannten Fällen anschliessend die Basisplatte noch in einer gesonderten Vorrichtung mit Bohrungen für die Stifte versehen werden muss. Damit ist auch hier das Erfordernis von aufwendigen und kostspieligen Sondergerätschaften gegeben, deren Bedienung entsprechende Fachkenntnisse und Feingefühl voraussetzt sowie zu einem erheblichen Zeitaufwand in der Handhabung führt. Ausserdem besteht die Gefahr von Ungenauigkeiten insbesondere bei einem Wechsel zwischen Zielvorrichtung und Bohrgerät.

Schliesslich ist auf die US-A 2 842 845 zu verweisen, durch die es grundsätzlich bekannt ist, eine Basisplatte mit einem Feld von Bohrungen für die Anbringung von Zahn-Stiften auszustatten.

Aufgabe der Erfindung ist es, ein Verfahren nebst Vorrichtung der eingangs genannten Art bezüglich der Positionierung der Zahn-Stifte an der Basisplatte derart zu verbessern und zu vereinfachen, dass sich der Einsatz teurer Sondergerätschaften erübrigt, bei einfachen und auch durch weniger spezialisiertes Personal durchführbaren Arbeiten die Arbeitszeit wesentlich herabgesetzt wird und die gewünschte Genauigkeit der Stiftepositionen ohne die Gefahr von Beeinträchtigungen während des Arbeitsganges erreicht wird.

Diese Aufgabe ist bei dem erfindungsgemässen Verfahren dadurch gelöst, dass zur Positionierung der Zahn-Stifte eine Peilplatte aus durchsichtigem Material auf den Abdruck in diesem gegenüber geführter Weise aufgelegt wird, dass die Positionen der Zahn-Stifte an der Peilplatte auf der dem Abdruck abgewandten Seite markiert werden, dass die Peilplatte anschliessend umgedreht in die Führung eingesetzt wird, dass dann auf ihre den Markierungen abgewandte Seite die in gleicher Weise wie die Peilplatte gegenüber dem Abdruck geführte Basisplatte aufgelegt wird, und dass schliesslich die Zahn-Stifte in die Basisplatte gegenüberliegend den Markierungen der Peilplatte in ein im Bereich des Abdruckes vorgesehenes Feld eng beieinanderliegender Bohrungen eingesteckt werden.

Durch die erfindungsgemässen Massnahmen ist es möglich geworden, in einem raschen und einfachen Arbeitsgang auf der durchsichtigen Peilplatte die Stellen zu markieren, an denen die Basisplatte später mit Zahn-Stiften versehen werden soll. Danach wird die Peilplatte einfach umgedreht und wird es auf sie mittels der gemeinsamen Führung die Basisplatte aufgelegt. Die Basisplatte ist ebenfalls durch einen vorhergehenden Arbeitsgang zweckmässig bereits bei der Herstellung mit einem Rasterfeld von Bohrungen versehen. Nunmehr kann man durch die Bohrungen der Basisplatte schauend die auf der Peilplatte vorhandenen Markierungen sehen und entsprechend die Basisplatte mit Zahn-Stiften bestücken. Da die Basisplatte von der der Peilplatte abgewandten Seite mit Zahn-Stiften bestückt werden muss, musste die Peilplatte vorher umgedreht werden, damit sich auf der Basisplatte nicht eine spiegelverkehrte Bestückung mit Stiften bezogen auf den negativen Kieferabdruck der Restzahnsituation ergibt.

Die erfindungsgemässe Lösung ist in ihrer Handhabung ausgesprochen einfach und betriebssicher. Insbesondere sind keine zusätzlichen Sondergerätschaften zur Bearbeitung erforderlich. Dadurch, dass die verwendeten Platten jeweils gegenüber dem Kieferabdruck entsprechend geführt sind, bereitet es auch keinerlei Mühe, die Basisplatte zum Schluss auf den mit Gips ausgegossenen Abdruck richtig aufzusetzen. Fehler und Ungenauigkeiten können hier nicht vorkommen. Auch besteht nicht die Gefahr, dass die Zahn-Stifte ihre durch die Bohrungen der Basisplatte gegebene Parallelität zueinander verlieren.

Was die Markierung der Positionen der Zahn-Stifte betrifft, so kann diese ebenfalls durch das Einstecken von Peil-Stiften in die entsprechenden Bohrungen der Platten erfolgen, wobei im Falle der Verwendung einer Peilplatte diese ebenfalls zunächst im Bereich des Abdruckes mit einem Feld eng beieinanderliegender Bohrungen versehen sein kann. Die Markierung der Positionen der Zahn-Stifte kann jedoch auch durch Farbpunkte oder dergleichen erfolgen.

Die zur Lösung der der Erfindung zugrundeliegenden Aufgabe geeignete Vorrichtung kann zweckmässigerweise derart ausgebildet sein, dass die Vorrichtung eine der Basisplatte entsprechende Peilplatte aus durchsichtigem Material aufweist, die auf den Abdruck aufsetzbar ist, dass Peilplatte im Bereich des Abdruckes ein Feld eng beieinanderliegender Bohrungen für Peil-Stifte aufweist, dass die Peilplatte in ihrer auf den Abdruck aufgesetzten Position durch Führung justiert gehalten ist, dass die Basisplatte ebenfalls durch die Führung gegenüber dem Abdruck justierbar ist, dass die Basisplatte ein der Peilplatte entsprechendes Feld eng beieinanderliegender Bohrungen für die Zahn-Stifte aufweist und dass die Bohrungen der Felder von Peilplatte und Basisplatte bei in die Führung eingesetzter Peilplatte und Basisplatte deckungsgleich übereinander angeordnet sind.

Dabei kann es vorteilhaft sein, dass die Bohrungen und wenigstens der in die Bohrungen einzusetzende Längenabschnitt der Stifte einen gleichen unsymmetrischen Querschnitt aufweisen. Damit ist erreicht, dass pro Sägestumpf nur noch ein Stift angebracht werden muss, da nunmehr ein Verdrehen des Sägestumpfes gegenüber der Basisplatte nicht mehr möglich ist. Hiermit ist nicht nur die Arbeit hinsichtlich Markierung und Anbringung von Stiften auf die Hälfte reduziert. Es ist auch die Hälfte der Stifte gespart und es entfällt das bisher übliche Verklemmen zwischen zwei Zahn-Stiften des selben Stumpfes durch die Gipsexpansion beim Aushärten, womit die spätere Handhabung erleichtert ist.

Ferner ist es zweckmässig, dass die Bohrungen und der in diese einzusetzende Längenabschnitt der Stifte konisch ausgebildet sind, wodurch sich ein guter Sitz der Stifte in der Basisplatte ergibt.

Bezüglich der erfindungsgemässen Vorrichtung ist es ferner zweckmässig, dass der Abdruck auf einer Trägerplatte festlegbar ist und dass die Trägerplatte die Führung aufweist.

Dabei kann die Führung durch eine sich senkrecht zur Abdruckebene erstreckende Wandung der Trägerplatte und wenigstens einen darin angeordneten Führungsschlitz für den formschlüssigen Eingriff eines Führungsfortsatzes der Peilplatte bzw. Basisplatte gebildet sein.

Durch diese Massnahmen ist insbesondere sichergestellt, dass während des ganzen Arbeitsprozesses die Führung für Platten immer dieselbe ist, wobei deren Relativlage zum Zahnkranzabdruck erhalten bleibt, so dass sich hier bei der Handhabung keine Fehler oder Ungenauigkeiten einstellen können.

Die Erfindung ist nachfolgend anhand von Ausführungsformen näher erläutert, die auf der Zeichnung vereinfacht und schematisch dargestellt sind. In der Zeichnung zeigen:

Fig. 1 eine Trägerplatte mit darauf befestigtem Zahnkranzabdruck;
Fig. 2 eine teilweise Draufsicht auf Fig. 1 mit auf den Zahnkranzabdruck aufgesetzter Peilplatte;
Fig. 3 den Gegenstand gemäss Fig. 1 und 2 beim Bestücken der Basisplatte mit Stiften und
Fig. 4 die Anordnung aus Trägerplatte und Zahnkranzabdruck mit endgültig aufgesetzter Basisplatte.

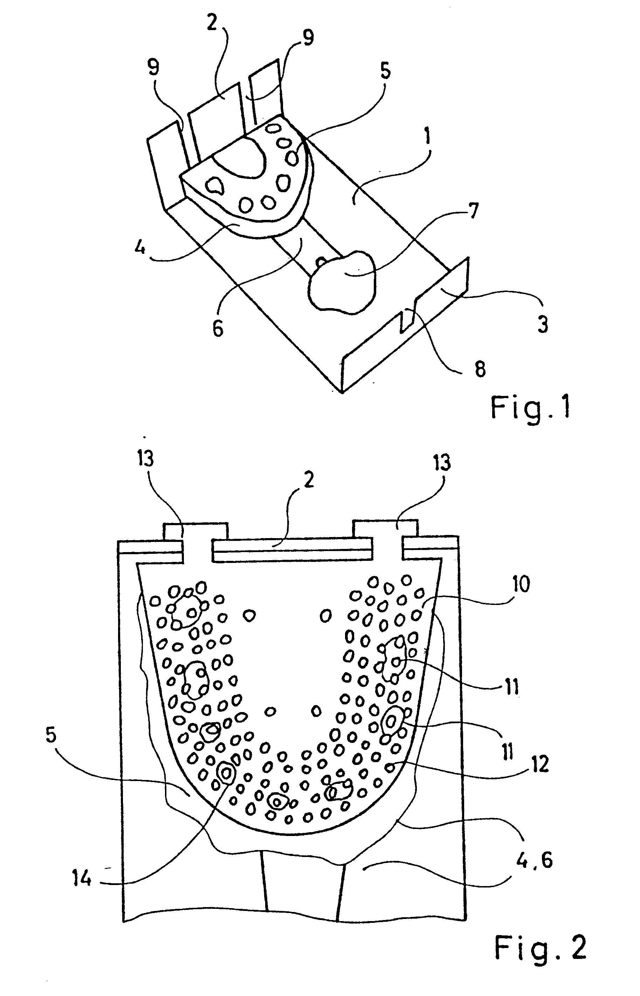

Figur 1 zeigt eine Trägerplatte 1 mit auf gegenüberliegenden Enden rechtwinklig nach oben sich erstreckenden Wandungen 2 und 3. Auf der Trägerplatte 1 ist der in einem Löffel 4 enthaltene Abdruck 5 eines Zahnkranzes befestigt, indem der Löffel gegen die Wandung 2 gestossen und der Stiel 6 des Löffels mit Silikon 7 arretiert ist. Bei entsprechender Ausbildung des Stieles 6 kann dessen zusätzliche Fixierung auch noch in einem Schlitz 8 der Wandung 3 erfolgen.

Die Wandung 2 weist zwei Führungsschlitze 9 auf, die sich senkrecht zur Oberflächenebene des Abdruckes 5 erstrecken.

Figur 2 zeigt den Gegenstand gemäss Figur 1 im Bereich des Abdruckes 5 in Draufsicht. Auf den Abdruck ist eine Peilplatte 10 aus glasklar durchsichtigem Material gesetzt, durch die hindurch man die Konturen 11 des Zahnkranzabdruckes sehen kann. Die Peilplatte 10 ist im Bereich des Zahnkranzabdruckes mit einem Feld eng beieinanderliegender Bohrungen 12 versehen. Ausserdem weist die Peilplatte Führungsfortsätze 13 auf, mit denen sie formschlüssig in den Schlitzen 9 der Wandung 2 sitzt.

Da die Konturen des Abdruckes 5 durch die Peilplatte 10 hindurch sichtbar sind, besteht auch die Möglichkeit, zur Markierung der Stellen, an denen die Basisplatte später mit Zahn-Stiften versehen sein soll, beispielsweise Peil-Stifte in die Bohrungen 12 einzusetzen, und zwar bezogen auf Figur 2 von oben, wie dies bei 14 beispielhalber durch Ausfüllen der Bohrung graphisch dargestellt ist.

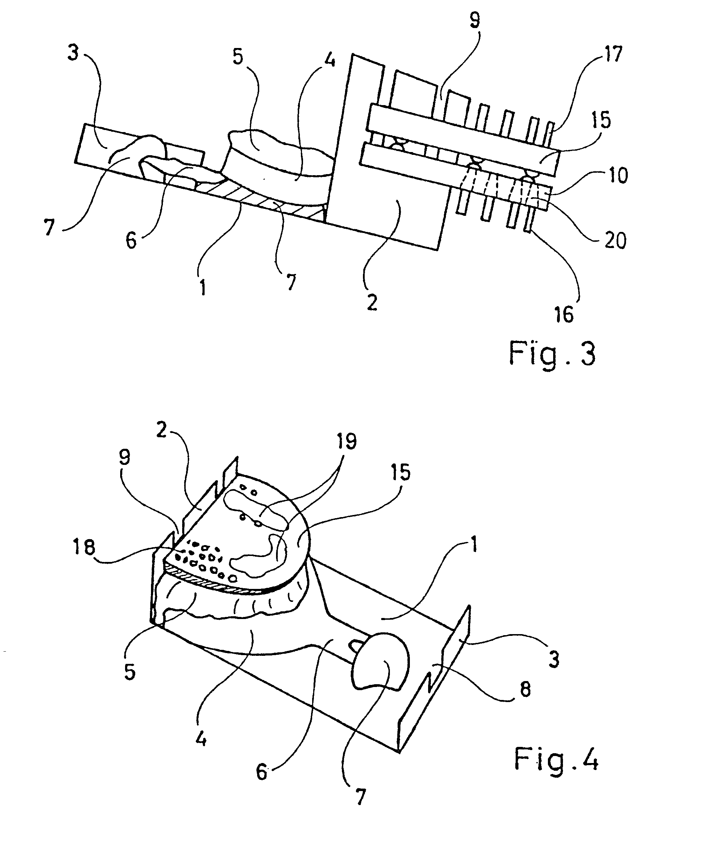

Die so mit Peil-Stiften versehene Peilplatte 10 liefert bezüglich der Anordnung der Stifte eine spiegelbildliche Wiedergabe der tatsächlich für die Basisplatte erforderlichen Anordnung von Zahn-Stiften. Um diese spiegelbildliche Anordnung umzukehren, wird gemäss Figur 3 die Peilplatte 10 in umgedrehter Weise in die Führungen 9 eingesetzt und es wird mit Hilfe dieser Führungen eine gleichermassen ausgebildete, insbesondere gleichermassen mit Bohrungen versehene Basisplatte 15 von der den Peil-Stiften 16 gegenüberliegenden Seite auf die Peilplatte 10 gelegt. Die Basisplatte 15 kann ebenfalls aus durchsichtigem Material bestehen. Dies ist jedoch nicht erforderlich, denn man kann durch die Bohrungen der Basisplatte 15 die Stellen sehen, an denen die entsprechenden Bohrungen der Peilplatte 10 durch die Peil-Stifte 16 verschlossen sind. An diesen Stellen kann man dann die Basisplatte 15 mit Zahn-Stiften 17 bestücken. Dreht man nunmehr die so vorbereitete Basisplatte 15 um und bringt sie mit Hilfe der Führungen 9 auf den Zahnkranzabdruck 5 zur Auflage, so entsprechen die Positionen der Zahn-Stifte 17 genau den Positionen, die gemäss Figur 2 mit Hilfe der Peilplatte 10 ausgewählt wurden. Man kann nunmehr das Zahnkranzmodell 5 mit Gips ausgiessen und die Basisplatte 15 zusammen mit ihren Zahn-Stiften 17 entsprechend aufsetzen, so dass die Zahn-Stifte 17 an den gewünschten Stellen in den Gips hineintauchen und dort beim Aushärten des Gipses festgelegt werden. Letzteres zeigt Figur 4, wobei auch bezüglich der Basisplatte 15 die Bohrungen 18 für die Zahn-Stifte ersichtlich sind. Mit 19 ist überschüssiger Gips angedeutet, der sich beim Aufdrücken der Basisplatte 15 über die Bohrungen 18 befreit.

Figur 3 zeigt auch, dass die Peil-Stifte 16 über einen konischen Abschnitt 20 in den Bohrungen der Peilplatte 10 sitzen. Entsprechenden konischen Sitz weisen auch die Zahn-Stifte 17 in der Basisplatte 15 auf. In nicht näher dargestellter Weise kann dabei der Bohrungsquerschnitt und entsprechend der Querschnitt der Stifte 16 bzw. 17 unrund sein, so dass für jeden künftigen Sägestumpf des Zahnkranzmodelles nur ein Stift erforderlich ist, da sich dieser in seiner Bohrung der Basisplatte 15 nicht verdrehen kann.

**Patentansprüche**

1. Verfahren zur Herstellung eines auf einer ebenen Basisplatte (15) festgelegten, zur Entnahme einzelner Zahnmodelle zersägbaren Modells eines Zahnkranzes durch Ausgiessen eines von einem Kiefer mit Hilfe eines Löffels (4) entnommenen Zahnkranzabdruckes (5) und Aufsetzen der passend zu den Zähnen, Zahnstümpfen und/ oder Zahnlücken mit Zahn-Stiften (17) (sog. Pins) bestückten Basisplatte (15) auf den Abdruck (5) bei noch nicht erhärteter Gussmasse, wobei die Zahn-Stifte einerseits in die Gussmasse eindringen und dort bei deren Erhärten festgelegt werden und andererseits in Bohrungen der Basisplatte (15) lösbar eingesteckt sitzen, dadurch gekennzeichnet, dass zur Positionierung der Zahn-Stifte (17) eine Peilplatte (10) aus durchsichtigem Material auf den Abdruck (5) in diesem gegenüber geführter Weise aufgelegt wird, dass die Positionen der Zahn-Stifte an der Peilplatte auf der dem Abdruck abgewandten Seite markiert werden, dass die Peilplatte anschliessend umgedreht in die Führung (9) eingesetzt wird, dass dann auf ihre den Markierungen abgewandte Seite die in gleicher Weise wie die Peilplatte gegenüber dem Abdruck geführte Basisplatte aufgelegt wird, und dass schliesslich die Zahn-Stifte (17) in die Basisplatte gegenüberliegend den Markierungen der Peilplatte in ein im Bereich des Abdruckes vorgesehenes Feld eng beieinanderliegender Bohrungen (18) eingesteckt werden.

2. Verfahren nach Anspruch 1, dadurch gekennzeichnet, dass die Peilplatte (10) im Bereich des Abdruckes (5) mit einem Feld eng beieinanderliegender Bohrungen (12) für die Peil-Stifte (16) versehen wird.

3. Verfahren nach Anspruch 1 oder 2, dadurch gekennzeichnet, dass die Positionen der Zahn-Stifte ebenfalls durch Peil-Stifte markiert werden.

4. Verfahren nach Anspruch 1 oder 2, dadurch gekennzeichnet, dass die Positionen der Zahn-Stifte durch Farbpunkte oder dergleichen markiert werden.

5. Vorrichtung zur Herstellung eines auf einer ebenen Basisplatte (15) festgelegten, zur Entnahme einzelner Zahnmodelle zersägbaren Modells eines Zahnkranzes, welches Modell durch Ausgiessen eines von einem Kiefer mit Hilfe eines Löffels (4) entnommenen Zahnkranzabdruckes (5) und Aufsetzen der passend zu den Zähnen, Zahnstümpfen und/oder Zahnlücken mit Zahn-Stiften (17) (sog. Pins) bestückten Basisplatte (15) auf den Abdruck (5) bei noch nicht erhärteter Gussmasse gefertigt wird, wobei die Zahn-Stifte einerseits in die Gussmasse eindringen und dort bei deren Erhärten festgelegt werden und andererseits in Bohrungen der Basisplatte (15) lösbar eingesteckt sitzen, dadurch gekennzeichnet, dass die Vorrichtung eine der Basisplatte (15) entsprechende Peilplatte (10) aus durchsichtigem Material aufweist, die auf den Abdruck (5) aufsetzbar ist, dass die Peilplatte im Bereich des Abdruckes ein Feld eng beieinanderliegender Bohrungen (12) für Peil-Stifte (16) aufweist, dass die Peilplatte in ihrer auf den Abdruck aufgesetzten Position durch eine Führung (9, 13) justiert gehalten ist, dass die Basisplatte ebenfalls durch die Führung gegenüber dem Abdruck justierbar ist, dass die Basisplatte ein der Peilplatte entsprechendes Feld eng beieinanderliegender Bohrungen (18) für die Zahn-Stifte (17) aufweist und dass die Bohrungen der Felder von Peilplatte und Basisplatte bei in die Führung eingesetzter Peilplatte und Basisplatte deckungsgleich übereinander angeordnet sind.

6. Vorrichtung nach Anspruch 5, dadurch gekennzeichnet, dass die Bohrungen und wenigstens der in die Bohrungen einzusetzende Längenabschnitt der Zahn-Stifte einen gleichen, unsymmetrischen Querschnitt aufweisen.

7. Vorrichtung nach Anspruch 5 oder 6, dadurch gekennzeichnet, dass die Bohrungen und der in diese einzusetzende Längenabschnitt der Zahn- und/oder Peil-Stifte konisch ausgebildet sind.

8. Vorrichtung nach einem der Ansprüche 5 bis 7, dadurch gekennzeichnet, dass der Abdruck (5) auf einer Trägerplatte (1) festlegbar ist und dass die Trägerplatte die Führung (9) aufweist.

9. Vorrichtung nach Anspruch 8, dadurch gekennzeichnet, dass die Führung durch eine sich senkrecht zur Abdruckebene erstreckende Wandung (2) der Trägerplatte (1) und wenigstens einen darin angeordneten Führungsschlitz (9) für den formschlüssigen Eingriff eines Führungsfortsatzes (13) der Peilplatte (10) bzw. Basisplatte (15) gebildet ist.

## Claims

1. Method for the production of a model of a set of teeth which is fixed on a flat base plate (15) and can be sawn apart for the taking of individual tooth models, by filling out a tooth set impression (5) taken from a jaw with the aid of a scoop (4) and placing the base plate (15), equipped with tooth pins (17) in adaptation to the teeth, tooth stumps and/or tooth gaps, on to the impression (5) with the casting composition not yet set, where the tooth pins for one part penetrate into the casting composition and are made fast there in the setting of the composition and for the other part are seated detachably inserted into bores of the base plate (15), characterised in that for the positioning of the tooth pins (17) a locating plate (10) of transparent material is laid upon the impression (5) in a guided manner in relation thereto, in that the positions of the tooth pins are marked on the locating plate on the side remote from the impression, in that the locating plate is next inserted in reversed manner into the guide (9), in that then the base plate guided in relation to the impression in the same manner as the locating plate is laid upon the side of the locating plate remote from the markings, and in that finally the tooth pins (17) are inserted into the base plate lying oppositely to the markings of the locating plate into an area of closely adjacent bores (18) provided in the region of the impression.

2. Method according to Claim 1, characterised in that the locating plate (10) is provided in the region of the impression (5) with an area of closely adjacent bores (12) for the locating pins (16).

3. Method according to Claim 1 or 2, characterised in that the positions of the tooth pins are likewise marked by locating pins.

4. Method according to Claim 1 or 2, characterised in that the positions of the tooth pins are marked by colour spots or the like.

5. Apparatus for the production of a model of a set of teeth which is made fast on a flat base plate (15) and can be sawn apart for the taking of individual tooth models, which model is manufactured by filling out a tooth set impression (5) taken from a jaw with the aid of a scoop (4) and setting the base plate (15), equipped with tooth pins (17) in adaptation to the teeth, tooth stumps and/or tooth gaps. Upon the impression (5) with the casting composition not yet set, whereby the tooth pins for the one part penetrate into the casting composition and are made fast there on setting thereof and for the other part are seated removably inserted into bores of the base plate (15), characterised in that the apparatus comprises a locating plate (10) of transparent material corresponding to the base plate (15), which plate can be set upon the impression (5), in that the locating plate comprises in the region of the impression an area of closely adjacent bores (12) for locating pins (16), in that the locating plate is held adjusted in its position set upon the impression by a guide (9, 13), in that the base plate is likewise adjustable by the guide in relation to the impression, in that the base plate comprises an area, corresponding to the locating plate, of closely adjacent bores (18) for the tooth pins (17) and in that the bores of the areas of locating plate and base plate are arranged coincidently one above the other when the locating plate and base plate are inserted into the guide.

6. Apparatus according to Claim 5, characterised in that the bores and at least the length section of the tooth pins to be inserted into the bores have an equal, asymmetrical cross-section.

7. Apparatus according to Claim 5 or 6, characterised in that the bores and the length section of the tooth and/or locating pins for insertion into these are made conical.

8. Apparatus according to one of Claims 5 to 7, characterised in that the impression (5) can be made fast on a carrier plate (1) and in that the carrier plate comprises a guide (9).

9. Apparatus according to Claim 8, characterised in that the guide is formed by a wall (2) of the carrier plate (1) extending perpendicularly of the impression plane and at least one guide slot (9) arranged therein for the shapelocking engagement of a guide extension (13) of the locating plate (10) and/or base plate (15) as the case may be.

## Revendications

1. Procédé pour la réalisation d'une empreinte d'arcade dentaire positionnée sur une plaque de base (15) plane et pouvant être sciée en vue de prélever différentes empreintes de dents, par le remplissage d'une empreinte d'arcade dentaire (5) prélevée d'un maxillaire à l'aide d'une cuillère (4) et par l'application sur l'empreinte (5) dont la masse de remplissage n'est pas encore durcie, de la plaque de base (15) équipée de pivots de dents (17) (dits pins) ajustés aux dents, chicots et/ou creux entre les dents, les pivots de dents pénétrant d'une part dans la masse de remplissage où ils sont fixés lors du durcissement de celle-ci et étant engagés d'autres part de manière amovible dans des perçages de la plaque de base (15), caractérisé en ce que, pour le positionnement des pivots de dents (17), une plaque de repérage (10) réalisée dans un matériau transparent est déposée sur l'empreinte (5) de manière guidée par rapport à celle-ci, que les positions des pivots de dents sur la plaque de repérage sont marquées sur le côté opposé à l'empreinte, que la plaque de repérage est ensuite retournée et placée à l'envers dans le guidage (9), que la plaque de base guidée de la même façon par rapport à l'empreinte que la plaque de repérage est ensuite déposée sur la face opposée aux marquages de cette dernière, et qu'enfin les pivots de dents (17) sont introduits, en face des marquages de la plaque de repérage, dans'un champ serré de perçages (18) prévu dans la région de l'empreinte.

2. Procédé selon la revendication 1, caractérisé en ce que la plaque de repérage (10) est munie, dans la région de l'empreinte (5), d'un champ serré de perçages (12) pour les pivots de repérage (16).

3. Procédé selon l'une des revendications 1 ou 2, caractérisé en ce que les positions des pivots de dents sont également marquées par des pivots de repérage.

4. Procédé selon l'une des revendications 1 ou 2, caractérisé en ce que les positions des pivots de dents sont marquées par des points de couleurs ou analogues. -

5. Dispositif pour la réalisation d'une empreinte d'arcade dentaire positionnée sur une plaque de base (15) plane et pouvant être sciée en vue de prélever différentes empreintes de dents, laquelle empreinte est réalisée par le remplissage d'une .empreinte d'arcade dentaire (5) prélevée d'un maxillaire à l'aide d'une cuillère (4), et par l'application sur l'empreinte (5) dont la masse de remplissage n'est pas encore durcie, de la plaque de base (15) équipée de pivots de dents (17) (dits pins) ajustés aux dents, chicots et/ou creux entre les dents, les pivots de dents pénétrant d'une part dans la masse de remplissage où ils sont fixés lors du durcissement de celle-ci et étant engagés d'autre part de manière amovible dans des perçages de la plaque de base (15), caractérisé en ce qu'il comprend une plaque de repérage (10) correspondant à la plaque de base (15) et réalisée dans un matériau transparent, qui peut être déposée sur l'empreinte (5), que la plaque de repérage présente, dans la région de l'empreinte, un réseau serré de perçages (12) pour des pivots de repérage (16), que la plaque de repérage, déposée sur l'empreinte, est maintenue par un guidage (9, 13) dans une position ajustée, que la plaque de base peut être ajustée, elle aussi, par le guidage par rapport à l'empreinte, que la plaque de base présente, conformément à la plaque de repérage, un réseau serré de perçages (18) pour les pivots de dents (17), et que les perçages des réseaux de la plaque de repérage et de la plaque de base sont superposés avec coïncidence lorsque la plaque de repérage et la plaque de base sont placées dans le guidage.

6. Dispositif selon la revendication 5, caractérisé en ce que les perçages et au moins la partie de la longueur des pivots de dents à introduire dans les perçages présentent une même section transversale asymétrique.

7. Dispositif selon l'une des revendications 5 ou 6, caractérisé en ce que les perçages et la partie de la longueur des pivots de dents et/ou de repérage présentent une forme conique.

8. Dispositif selon l'une des revendications 5 à 7, caractérisé en ce que l'empreinte (5) peut être immobilisée sur une plaque de support (1) et que la plaque de support comporte le guidage (9).

9. Dispositif selon la revendication 8, caractérisé en ce que le guidage est constitué par une paroi (2) de la plaque de support (1) qui s'étend perpendiculairement au plan de l'empreinte, et par au moins une fente de guidage (9) ménagée dans ladite paroi pour l'engagement positif d'un appendice de guidage (13) de la plaque de repérage (10) et respectivement de la plaque de base (15).

Fig.1

Fig. 2

Fïg . 3

Fig.4